# EUROPÄISCHE PATENTANMELDUNG

(11) **EP 1 046 898 A2**
(43) Veröffentlichungstag der Anmeldung: **25.10.2000**
(21) Anmeldenummer: 00105815.5
(22) Anmeldetag: 18.03.2000
(51) Int. Cl.: G01N 1/31

(54) **Färbeautomat zum Einfärben von Objekten zur mikroskopischen Untersuchung**

(30) Priorität: 23.04.1999 DE 19918442
(71) Anmelder: Leica Microsystems Nussloch GmbH, 69226 Nussloch b. Heidelberg (DE)
(72) Erfinder: Thiem, Stefan, 69124 Heidelberg (DE); Barth, Eric, 69181 Leimen (DE); Künkel, Stefan, 76185 Karlsruhe (DE); Kaltenmeier, Ralf, 69226 Nussloch (DE); Glasenapp, Joachim, 68542 Heddesheim (DE)

(57) **Zusammenfassung**

Es wird ein Färbeautomat (1) zum Einfärben von auf Objektträgern (2) angeordneten Objekten zur mikroskopischen Untersuchung beschrieben. Der Färbeautomat (1) weist mehrere hintereinander angeordnete Reagenzienbehälter (3) zur Behandlung der Objekte auf. Die Objektträger (2) durchlaufen nacheinander die Reagenzienbehälter (3), wobei ein Transportkorb (4) zur Aufnahme von mehreren Objektträgern (2) vorgesehen ist. Mehrere Transportkörbe (4) können gleichzeitig in jeweils unterschiedlichen Reagenzienbehälter (3) aufgenommen werden und über einen motorischen Transportmechanismus mit einer Hebeeinrichtung (7) gleichzeitig aus dem jeweiligen Reagenzienbehälter (3) herausgehoben und in jeweils einen benachbarten Reagenzienbehälter (3) weitertransportiert werden. Am Ende der Reagenzienbehälterreihe ist eine Entnahmestation (8) angeordnet, die einen Sammel-Reagenzienbehälter (9) zur gleichzeitigen Aufnahme von mehreren Transportkörben (4) aufweist.

## Beschreibung

Die Erfindung betrifft einen Färbeautomat zum Einfärben von auf Objektträgern angeordneten Objekten zur mikroskopischen Untersuchung, bei dem mehrere hintereinander angeordnete Reagenzienbehälter zur Behandlung der Objekte vorgesehen sind und die Objekte die Reagenzienbehälter nacheinander durchlaufen, mit einem Transportkorb zur Aufnahme von mehreren Objektträgern, wobei mehrere Transportkörbe gleichzeitig in jeweils unterschiedlichen Reagenzienbehälter aufgenommen werden können und die Transportkörbe über einen motorischen Transportmechanismus mit einer Hebeeinrichtung gleichzeitig aus dem jeweiligen Reagenzienbehälter herausgehoben und um jeweils einen Schritt in einen benachbarten Reagenzienbehälter weitertransportiert werden.

Die für eine mikroskopischen Untersuchung vorgesehenen histologischen Objekte werden nach dem Schneiden mit einem Mikrotom auf Objektträger gebracht. Der Objektträger wird dann entsprechend beschriftet und katalogisiert. Zur Steigerung des Kontrastes für eine nachfolgende mikroskopische Untersuchung werden diese Objekte eingefärbt. Dabei werden die Strukturen in den Zellen bzw. im Gewebe differenziert sichtbar gemacht. In der Praxis hat sich, neben verschiedenen Spezialfärbungen, ein Standardfärbeprozess bewährt. Bei dieser H.E. - Färbung durchlaufen die Proben verschiedene Verarbeitungsstufen mit Xylol, Alkohol, Eosin, Hematoxylin, Essigsäure und Wasser. Zum Einfärben der Objekte werden verschiedene Arten von Färbeautomaten verwendet, die die Proben automatisch den jeweiligen Verarbeitungsstufen zuführen. Die Färbeautomaten unterscheiden sich in ihrem mechanischen Aufbau und in ihrer Funktionsweise.

Aus der DE 36 34 976 C2 ist ein Färbeautomat mit einer Vielzahl von neben- und hintereinander angeordneten Reagenzienbehältern bekannt, bei dem die Objektträger in Präparathaltern angeordnet und mit einer Transportvorrichtung zu den verschiedenen Behältern transportiert werden. Bei diesem Automaten können verschiedene Färbeprogramme gleichzeitig durchgeführt werden. Dazu kann der Präparathalter über die Transportvorrichtung mit einer als 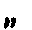 Portalkran" ausgebildeten Greif- und Positioniervorrichtung individuell in einen beliebigen Behälter eingebracht werden und wird dort von der Transportvorrichtung entkoppelt. Mit dieser Transportvorrichtung läßt sich nur ein einziger Präparathalter gleichzeitig bewegen. Somit ist hier nur ein geringer Durchsatz an Objekten gegeben.

Ein weiterer zweireihig aufgebauter Färbeautomat mit hintereinander angeordneten Reagenzienbehältern ist aus der DE 41 17 831 C2 bekannt. Auch hier werden die Präparathalter von einer Transportvorrichtung einzeln zu den verschiedenen Behältern transportiert und dort wieder von der Transportvorrichtung entkoppelt. Auch hier lassen sich gleichzeitig mehrere Färbeprozesse individuell durchführen, jedoch auch mit dem Nachteil, daß nur ein relativ geringer Durchsatz möglich ist.

Ein Färbeautomat für die H.E. Färbemethode mit erhöhtem Durchsatz ist in der US 4 911 098 beschrieben. Der Automat weist mehrere hintereinander angeordnete Reagenzienbehälter auf, in die über eine Transport- und Greifvorrichtung die in Präparathaltern angeordneten Objekte eingebracht werden. Nach dem Einbringen werden die Präparathalter auch hier von der Greifvorrichtung entkoppelt. Ein erhöhter Durchsatz wird dadurch erreicht, daß gleichzeitig mehrere Transport- und Greifvorrichtungen in dem Färbeautomaten vorhanden sein können, Die Anordnung von mehreren Transport- und Greifvorrichtungen ist natürlich mit einem sehr hohen Aufwand verbunden.

Weitere Färbeautomaten mit vereinfachtem Transportmechanismus und mit hohem Präparatdurchsatz werden unter der Bezeichnung 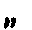 COT 20" von der Firma 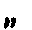 medite" und der Bezeichnung 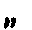 Linear Slide Stainer II" von der Firma 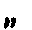 Sakura" angeboten. Beide Färbeautomaten arbeiten nach dem Prinzip einer immer wiederkehrenden Transportbewegung für die Transportkörbe, in denen sich die Objektträger mit den Objekten befinden. Bei der Transportbewegung werden die Transportkörbe mit konstanten Taktzeiten in die hintereinander angeordneten Reagenzienbehälter transportiert. Eine notwendige Verweilzeit der Objekte in den jeweiligen Behältern wird durch mehrere hintereinander angeordnete Reagenzienbehälter erreicht. Der Transportkorb wird in eine Transportschiene eingehängt und von der Transportschiene um einen bestimmten Weg bis zum nächsten Reagenzienbehälter befördert und dort wieder abgesenkt. Die Transportschiene fährt unter dem Tragbügel des Transportkorbs in ihre Ausgangsposition zurück. Jetzt kann ein weiterer Transportkörbe auf der Transportschiene plaziert werden. Nach Ablauf eines vorgegebenen Zeittaktes hebt die Transportschiene alle im Färbeautomaten vorhandenen Transportkörbe gleichzeitig an und transportiert sie in den nächsten Reagenzienbehälter. Am letzten Reagenzeinbehälter ist ein Sensor vorgesehen, der vom Transportkorb ausgelöst wird und ein entsprechendes Signal auslöst. Der Prozeß wird jetzt so lange angehalten, bis der entsprechende Transportkorb entnommen wird. Nachteilig ist hier, daß der Färbeautomat ständig beaufsichtigt werden muß, da andernfalls die Proben zu lange in den jeweiligen Reagenzienbehältern verbleiben und unbrauchbar werden.

In der Praxis werden diese Färbeautomaten diskontinuierlich bestückt, so daß zwischen den einzelnen oder einer Gruppe von Transportkörben Freiräume bzw. ungenutzte Zeittakte bestehen. Die Bedienperson muß also ständig darauf achten, daß die Transportkörbe rechtzeitig entnommen werden.

Es ist daher Aufgabe der vorliegenden Erfindung, einen größeren Freiraum bei der Überwachung eines derartigen Färbeautomatens zu schaffen und gleichzeitig die Entnahme von Transportkörben zu vereinfachen.

Diese Aufgabe wird erfindungsgemäß durch die im kennzeichnenden Teil des Patentanspruches 1 angegebenen Merkmale gelöst. Weitere vorteilhafte Weiterbildungen sind Gegenstand der Unteransprüche.

Der Färbeautomat zeichnet sich dadurch aus, daß am Ende der Reagenzienbehälterreihe eine Entnahmestation mit einem Sammel-Reagenzienbehälter für die eingefärbten Objekte angeordnet ist. Dieser Sammel-Reagenzienbehälter ist so ausgebildet, daß mehrere Transportkörbe gleichzeitig aufgenommen werden können. Dabei ist es auch unerheblich, in welcher zeitlichen Reihenfolge die Transportkörbe im Sammelbehälter eintreffen. Auch größere zeitliche Abstände bzw. Zeittakte zwischen den einzelnen eintreffenden Transportkörben sind möglich, ohne daß eine Bedienperson eingreifen muß. Erst wenn der Sammelbehälter vollständig mit Transportkörben gefüllt ist, wird der Transport unterbrochen. Außerdem ist dieser Sammelbehälter vorzugsweise mit Xylol oder einer anderen entsprechenden Flüssigkeit gefüllt. Dadurch wird verhindert, daß die bereits bearbeiteten Objekte austrocknen und für eine nachfolgende mikroskopische Untersuchung unbrauchbar werden.

In einer Ausgestaltung der Erfindung ist es vorgesehen, daß die Hebeeinrichtung im Bereich des Sammel-Reagenzienbehälters mit einem Stufenprofil ausgestattet ist. Damit wird erreicht, daß die Transportkörbe nur geringfügig angehoben und im Sammel-Reagenzienbehälter schrittweise so lange weitertransportiert werden, bis ein Endanschlag den Weitertransport begrenzt. An dieser Stelle wird der Antrieb nicht gestoppt. Dies wird durch das abgestufte Profil an der Gleitschiene möglich. Der Transportkorb wird von der Hebeeinrichtung nur um einen kleinen Betrag angehoben und weitertransportiert. Läuft der Transportkorb dabei gegen einen Endanschlag oder einen anderen Transportkorb, rutscht die Gleitschiene nur am Transportkorb entlang. Dadurch wird sichergestellt, daß die Transportkörbe in dem Sammel-Reagenzienbehälter hintereinander aufgereiht werden.

In einer weiteren Ausgestaltung der Erfindung ist es vorgesehen, daß die Entnahmestation einen dem Endanschlag gegenüberliegend angeordneten Sensor aufweist. Dieser Sensor wird erst dann aktiv, wenn der Sammel-Reagenzienbehälter vollständig mit Transportkörben gefüllt ist.

Die Entnahmestation weist mindestens eine Rampe auf, über die die Transportkörbe in den Sammel-Reagenzienbehälter gleiten und über den der Sensor auslösbar ist. Dazu ist der Rampe ein federnd vorgespannter Hebel zugeordnet. Beim Absetzen eines Transportkorbs auf der Rampe wird der Hebel bewegt und löst den Sensor aus. Gleichzeitig rutscht der Transportkorb auf der Rampe vollständig in den Sammel-Reagenzienbehälter ab. Dadurch wird das Sensorsignal wieder aufgehoben. Erst wenn der Sammelbehälter vollständig mit Transportkörben gefüllt ist, kann über die Rampe kein Korb mehr abrutschen und der Sensor bleibt aktiviert.

In einer weiteren Ausgestaltung der Erfindung ist die mit dem Sensor verbundene Steuerschaltung mit einer Zeitverzögerungslogik ausgestattet. Über diese Logik wird sichergestellt, daß entsprechende optische und/oder akustischen Signale und/oder Signale für den Transportmechanismus erst dann abgegeben werden, wenn das Sensorsignal eine gewisse Zeit ununterbrochen anliegt.

In einer vorteilhaften Ausgestaltung ist der Sensor als vollständig gekapselter Annäherungssensor ausgebildet ist, so daß keine aggressiven Flüssigkeiten oder Dämpfe in den Sensor eindringen und diesen zerstören können.

Die Entnahmestation ist in vorteilhafter Art und Weise als separate und nachrüstbare Baueinheit ausgebildet.

Die Erfindung wird anhand eines Ausführungsbeispiels mit Hilfe der schematischen Zeichnung näher erläutert. Es zeigen:
- Fig. 1 :: eine Ansicht des Färbeautomaten mit angesetzter Entnahmestation
- Fig. 2 :: eine Ansicht eines Transportkorbes mit Objektträgern
- Fig. 3 :: eine Ansicht der am Färbeautomaten angeordneten Entnahmestation

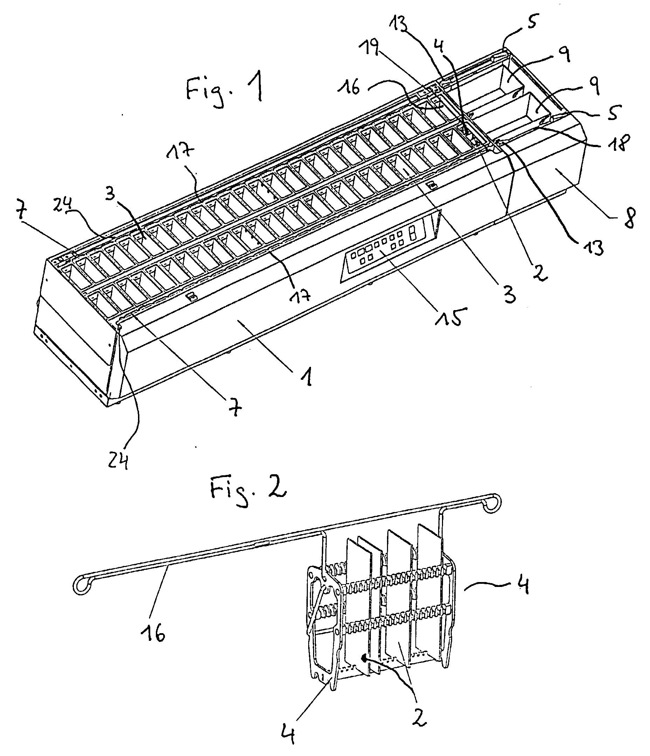

Die Figur 1 zeigt einen Färbeautomaten 1 mit einem Bedienpult 15 und mit zwei Reihen aus mehreren hintereinander angeordneten Reagenzienbehältern 3. Am rechten Ende des Färbeautomaten 1 ist eine Entnahmestation 8 mit je einem Sammel-Reagenzienbehälter 9 für jede Reagenzienbehälterreihe angeordnet. In einen der Reagenzienbehälter 3 ist ein Transportkorb 4 mit mehreren Objektträgern 2 über einen Transportbügel 16 eingehängt. Der motorische Transportmechanismus 6 weist eine Hebeeinrichtung 7 auf, über die die Transportkörbe 4 schrittweise von links nach rechts bewegt werden. Die Hebeeinrichtung 7 weist jeweils einen an der rechten und an der linken Reagenzienbehälterreihe angeordneten Transportarm 24 auf. Beide Arme 24 sind miteinander fest verbunden. Die Hebeeinrichtung 7 ist mit Transportkerben 17 ausgestattet, in die bei der Bewegung die Transportbügel 16 eingelegt sind.

Bei der Transportbewegung werden die Körbe 4 in die hintereinander angeordneten Reagenzienbehälter 3 transportiert. Dazu wird der Transportkorb 4 in die erste Kerbe 17 der Hebeeinrichtung 7 eingehängt. Die Hebeeinrichtung 7 hebt den Transportkorb 4 vollständig aus dem Reagenzienbehälter 3, wartet eine bestimmte Abtropfzeit und bewegt den Transportkorb 4 waagerecht bis zum nächsten Reagenzienbehälter 3 und senkt dann den Transportkorb 4 dort wieder ab. Die Hebeeinrichtung 7 wird dabei so weit abgesenkt, daß die Transportbügel 16 die Transportkerben 17 verlassen und sich am Rahmen des Reagenzienbehälters 3 oder am Rahmen des Färbeautomaten 1 abstützen. Jetzt ist die Hebeeinrichtung 17 frei und fährt unter dem Transportbügel 16 des Transportkorbs 4 in ihre Ausgangsposition zurück. Nach Ablauf eines vorgegebenen Zeittaktes hebt die Hebeeinrichtung 17 alle Transportkörbe 4 gleichzeitig an und transportiert sie in den nächsten Reagenzienbehälter 3. Am letzten Reagenzienbehälter 3 ist ein Sensor 19 vorgesehen, der vom Transportkorb 4 ausgelöst wird und ein entsprechendes Signal auslöst. Bei adaptierter Entnahmestation ist dieser Sensor 19 deaktiviert.

Aus dem letzten Reagenzienbehälter 3 wird der Transportkorb 4 über die Hebeeinrichtung 7 in die Entnahmestation 8 befördert und dabei zunächst auf einer Rampe 13, die auf einer Halteschiene 18 befestigt ist, mit dem Transportbügel 16 abgesetzt. Von dort aus gleitet der Transportkorb 4 vollständig in den Sammel-Reagenzienbehälter 9 und stützt sich dabei mit dem Transportbügel 16 auf der Halteschiene 18 ab. Der Rampe 18 gegenüberliegend ist an der Halteschiene 18 ein Endanschlag 5 befestigt.

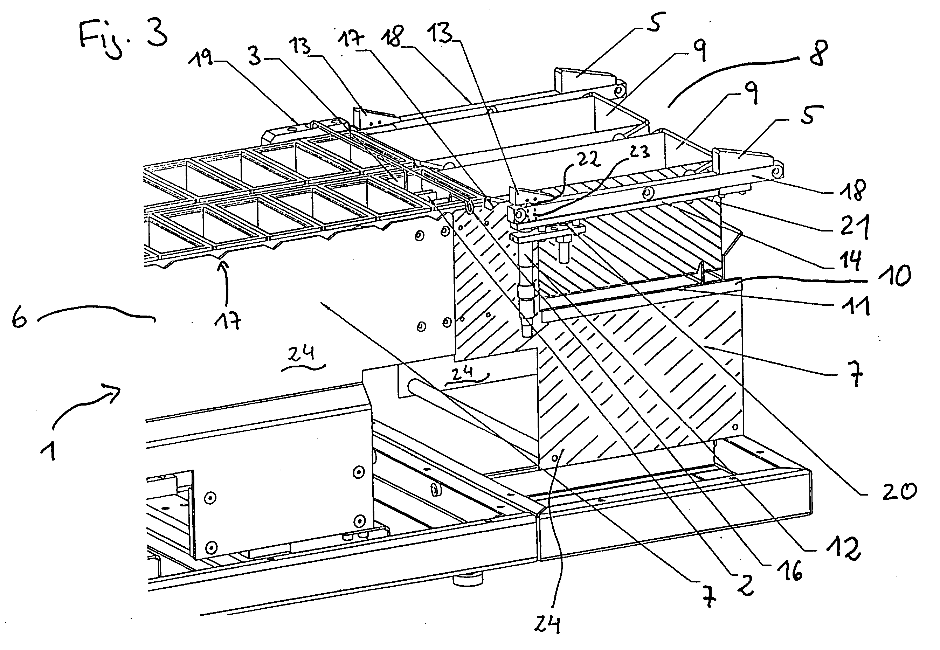

Die Figur 2 zeigt einen Transportkorb 4 mit vier eingelegten Objektträgern 2. Am Transportkorb 4 ist lösbar ein Transportbügel 16 befestigt.

Die Figur 3 zeigt eine Ansicht der am Färbeautomaten 1 angeordneten Entnahmestation 8 mit der Hebeeinrichtung 7 und den Transportkerben 17. Im Bereich der Entnahmestation 8 weist die Hebeeinrichtung nur noch eine Transportkerbe 17 auf. Daran anschließend ist die Hebeeinrichtung 7 mit einem tieferliegenden Stufenprofil 10 ausgestattet, so daß die auf der Halteschiene 18 befindlichen Transportbügel 16 bei der Hebebewegung nur noch einen kleinen Betrag angehoben werden. Dieser Betrag entspricht maximal der Höhe des Endanschlags 5.

Das Stufenprofil 10 ist zusätzlich mit einer Gleitschiene 11 ausgestattet, über die der Transportbügel 16 rutscht, wenn der Transportkorb 4 entweder am Endanschlag 5 oder an einem weiteren Transportkorb 4 anschlägt. Die Sammel-Reagenzienbehälter 9 werden so kontinuierlich mit ankommenden Transportkörben 4 aufgefüllt. Dabei ist es unerheblich, ob mit jedem Transporttakt ein Transportkorb 4 im Sammel-Reagenzienbehälter 9 abgesetzt wird oder ein oder mehrere Leertakte zwischen den Körben 4 vorhanden ist.

Der Sammel-Reagenzienbehälter 9 kann so lange Transportkörbe 4 aufnehmen, bis ein Korb 4 nicht mehr von der Rampe 13 abrutschen kann. Für diesen Fall ist die Rampe 13 mit einem Zapfen 22 versehen, der durch eine Bohrung 23 in der Halteschiene 18 geführt ist und sich an einem Hebel 14 abstützt. Der Hebel 14 ist über eine Druckfeder 20 und eine Halterung 21 an der Halteschiene 18 beweglich gelagert. Unterhalb des Hebels 14 ist ein Sensor 12 angeordnet, der elektrisch mit einer nicht mit dargestellten Steuerschaltung verbunden ist. Der Sensor 12 ist als Annäherungssensor ausgebildet und wird durch den von der Rampe 13 nach unten bewegten Hebel 14 ausgelöst.

Der Sensor 12 spricht natürlich bei jedem Absetzen eines Transportkorbs 4 bzw. seines Transportbügels 16 an. Damit nicht jedesmal ein entsprechendes Warnsignal ausgelöst wird, ist die Steuerschaltung mit einer Zeitverzögerungslogik ausgestattet. Erst nachdem die Hebeeinrichtung 7 in ihre Ausgangsstellung zurückgefahren ist, wird der Zustand des Sensors 12 abgefragt und ein entsprechendes Sensorsignal ausgewertet.

### Bezugszeichenliste

- 1 -: Färbeautomat
- 2 -: Objektträger
- 3 -: Reagenzienbehälter
- 4 -: Transportkorb
- 5 -: Endanschlag
- 6 -: Transportmechanismus
- 7 -: Hebeeinrichtung
- 8 -: Entnahmestation
- 9 -: Sammel-Reagenzienbehälter
- 10 -: Stufenprofil
- 11 -: Gleitschiene
- 12 -: Sensor
- 13 -: Rampe
- 14 -: Hebel
- 15 -: Bedienpult
- 16 -: Transportbügel
- 17 -: Transportkerbe
- 18 -: Halteschiene
- 19 -: Sensor an 1
- 20 -: Druckfeder
- 21 -: Halterung von 14 an 18
- 22 -: Zapfen an 13
- 23 -: Bohrung in 18
- 24 -: Transportarme

## Patentansprüche

1. Färbeautomat (1) zum Einfärben von auf Objektträgern (2) angeordneten Objekten zur mikroskopischen Untersuchung, bei dem mehrere hintereinander angeordnete Reagenzienbehälter (3) zur Behandlung der Objekte vorgesehen sind und die Objektträger (2) die Reagenzienbehälter (3) nacheinander durchlaufen, mit einem Transportkorb (4) zur Aufnahme von mehreren Objektträgern (2), wobei mehrere Transportkörbe (4) gleichzeitig in jeweils unterschiedlichen Reagenzienbehälter (3) aufgenommen werden können und die Transportkörbe (4) über einen motorischen Transportmechanismus (6) mit einer Hebeeinrichtung (7) gleichzeitig aus dem jeweiligen Reagenzienbehälter (3) herausgehoben und in jeweils einen benachbarten Reagenzienbehälter (3) weitertransportiert werden, dadurch gekennzeichnet, daß am Ende der Reagenzienbehälterreihe eine Entnahmestation (8) angeordnet ist, die einen Sammel-Reagenzienbehälter (9) zur gleichzeitigen Aufnahme von mehreren Transportkörben (4) aufweist.

2. Färbeautomat (1) nach Anspruch 1, dadurch gekennzeichnet, daß die Hebeeinrichtung (7) im Bereich des Sammel-Reagenzienbehälters (9) mit einem Stufenprofil (10) ausgestattet ist, so daß die Transportkörbe (4) im Sammel-Reagenzienbehälter (9) geringfügig angehoben und dann weitertransportiert werden.

3. Färbeautomat (1) nach Anspruch 2, dadurch gekennzeichnet, daß das Stufenprofil (10) eine Gleitschiene (11) aufweist.

4. Färbeautomat (1) nach Anspruch 1 - 3, dadurch gekennzeichnet, daß die Entnahmestation (8) mindestens einen Endanschlag (5) für einen Transportkorb (4) aufweist.

5. Färbeautomat (1) nach Anspruch 4, dadurch gekennzeichnet, daß die Entnahmestation (8) einen dem Endanschlag (5) gegenüberliegend angeordneten Sensor (12) aufweist.

6. Färbeautomat (1) nach mindestens einem der vorherigen Ansprüche, dadurch gekennzeichnet, daß die Entnahmestation (8) mindestens eine Rampe (13) aufweist, über die der Sensor (12) auslösbar ist.

7. Färbeautomat (1) nach Anspruch 5 oder 6, dadurch gekennzeichnet, daß der Sensor (12) mit einer Steuerschaltung zur Abgabe von optischen und/oder akustischen Signalen und/oder Signalen für den Transportmechanismus (6) verbunden ist.

8. Färbeautomat (1) nach Anspruch 7, dadurch gekennzeichnet, daß der Steuerschaltung eine Zeitverzögerungslogik zugeordnet ist.

9. Färbeautomat (1) nach mindestens einem der vorherigen Ansprüche, dadurch gekennzeichnet, daß der Sensor (12) als gekapselter Annäherungssensor ausgebildet ist.

10. Färbeautomat (1) nach mindestens einem der vorherigen Ansprüche, dadurch gekennzeichnet, daß der Rampe (13) ein federnd vorgespannter Hebel (14) zur Auslösung des Sensors (12) zugeordnet ist.

11. Färbeautomat (1) nach mindestens einem der vorherigen Ansprüche, dadurch gekennzeichnet, daß die Entnahmestation (8) als nachrüstbare separate Baueinheit ausgebildet ist.
